Europäisches Patentamt

(19) European Patent Office

Office européen des brevets

(11) Veröffentlichungsnummer: **0 002 468**

**A1**

(12)

# EUROPÄISCHE PATENTANMELDUNG

(21) Anmeldenummer: **78101500.3**

(22) Anmeldetag: **01.12.78**

(51) Int. Cl.²: **C 08 K 7/26**
**C 09 C 1/28, C 01 B 33/24**

(30) Priorität: **02.12.77 SE 7713682**

(43) Veröffentlichungstag der Anmeldung:
**27.06.79 Patentblatt 79/13**

(84) Benannte Vertragsstaaten:
**BE CH DE FR GB IT NL**

(71) Anmelder: **INTONG AB**

**S-69202 Kumla(SE)**

(72) Erfinder: **Jakobsson, Per**
**Blombergsvägen 24**
**S-720 30 Örebro(SE)**

(72) Erfinder: **Larsson, Ingemar**
**Hedvigsgatan 6**
**S-702 25 Örebro(SE)**

(74) Vertreter: **Solf, Alexander, Dr. et al,**
**Patentanwälte Dr. Solf & Zapf Postfach 13 02 19**
**D-5600 Wuppertal 1(DE)**

(54) **Anorganischer, synthetischer, Calcium- und/oder Magnesiumhydrosilikate aufweisender Füllstoff; verschiedene Materialien welche diesen Füllstoff enthalten.**

(57) Die Erfindung betrifft einen anorganischen, syntheti-schen, Calcium- und/oder Magnesiumhydrosilikate aufwei-senden Füllstoff für insbesondere Kunststoffe oder derglei-chen mit Partikeln, die eine Makro- und eine Mikroporen-struktur aufweisen. Die Makroporen sind teils vollkommen und/oder teils bruchstückhaft ausgebildet und bilden Fest-stoffstege, die mit feinstkapillaren Mikroporen durchsetzt sind. Nach einer bevorzugten Ausführungsform der Erfin-dung besteht der Füllstoff aus einem feinzerkleinerten Gas-beton-Produkt.

EP 0 002 468 A1

- 1 -

Füllstoff sowie seine Verwendung  **BEZEICHNUNG GEÄNDERT**
siehe Titelseite

Die Erfindung betrifft einen synthetischen anorganischen
Füllstoff, insbesondere für Kunststoffe, und solche Produkte, die zumindest teilweise aus organischen Stoffen
aufgebaut sind und unmittelbar verwendbare Fertigprodukte oder noch weiterverarbeitbare Zwischenprodukte
(Halbfabrikate) sein können. Derartige Produkte können
z. B. Kunststoff-, Gummi-, Petroleum- oder dergleichen
-produkte sein.

Synthetische Füllstoffe für Kunststoffe oder dergleichen
sind in zahlreichen physikalischen Ausführungsformen und
chemischen Konstitutionen bekannt. Diese Füllstoffe weisen in der Regel eine sehr regelmäßige, z. B. faserige,
sphärische oder kubische Struktur, und in der Regel
eine relativ geringe spezifische Oberfläche auf.
Beispielsweise trifft dies für
gefällte Kreide ($CaCO_3$) mit einer spezifischen Oberfläche von etwa 1,4 bis 2,0 $m^2$/g und Quarzsand ($SiO_2$)
mit einer spezifischen Oberfläche von 1,2 bis 1,4 $m^2$/g
zu. Darüber hinaus sind Füllstoffe mit höheren spezifischen Oberflächen bekannt, die aus chemischen Fällungen oder hydrothermalen Synthesen resultieren. Alle bekannten Füllstoffe mit relativ hoher oder niedriger
spezifischer Oberfläche weisen einen wesentlichen Nachteil auf. Die Bindung und damit die Festigkeit oder dergleichen gewünschte physikalische Eigenschaft wird vom Bindemittel, d.h. z. B. von der Kunststoffmasse, selbst getragen. Das bedeutet, daß der zumischbaren Menge des Füllstoffes enge Grenzen gesetzt sind. Es muß zumindest möglichst jedes Korn des Füllstoffes über eine Bindemittelbrücke miteinander verbunden sein, um eine Desintegration der Komponenten zu verhindern. Insofern ist die noch zumischbare Menge bekannter Füllstoffe von den adhäsiven Eigenschaften zum Bindemittel und sind die adhäsiven Eigenschaften u.a. insbesondere von der Oberflächenstruktur des Füllstoffkorns abhängig. Die Füllstoffeinmischung muß daher auf einem begrenzten Niveau gehalten werden. Die Grenze der zumischbaren Menge liegt in der Regel bei etwa 50 bis 60 Gew.-%.

Aufgabe der Erfindung ist, einen Füllstoff zu schaffen, der mit einer höheren Menge als üblich Kunststoffen oder ähnlichen anorganischen Produkten zugemischt werden kann, ohne daß die gewünschten Eigenschaften verschlechtert werden.

Diese Aufgabe wird erfindungsgemäß durch einen synthetischen anorganischen Füllstoff gelöst, der sich dadurch auszeichnet, daß seine Partikel eine Makro- und eine Mikroporenstruktur aufweisen. Von besonderem Vorteil ist, wenn der Füllstoff eine spezifische Oberfläche gemessen nach BET von über 10 m$^2$/g besitzt und in Korngrößen unter 2,0, vorzugsweise unter 0,5, insbesondere unter 0,1 mm, vorliegt.

Nach einer besonderen Ausführungsform der Erfindung besteht der neue Füllstoff im wesentlichen aus einem Silikathydrat, insbesondere aus einem Calcium- und/oder Magnesiumhydrosilikat. Ferner ist vorteilhaft, wenn der Füllstoff durch eine Hydrothermalsynthese hergestellt ist, und zwar aus einem Gemenge, das eine

0002468

- 3 -

CaO - und/oder MgO-Komponente sowie eine $SiO_2$-Komponente, vorzugsweise Quarzmehl, und Wasser enthält. Dabei ist zweckmäßig, die Makroporenstruktur mit Porenbildnern, vorzugsweise mit Al-Pulver, vor dem Hydrothermalprozeß zu erzeugen, wobei sich die Mikroporenstruktur während des Hydrothermalprozesses bildet. Ferner ist von Vorteil, wenn die Mischung so zusammengestellt und hydrothermal gehärtet wird, daß das Produkt nach der Reaktion einen Restquarzgehalt von 0 bis 20 Gew.-% vorzugsweise von 6 bis 8 Gew.-% aufweist.

Der erfindungsgemäße Füllstoff entsteht durch Feinzerkleinerung der aus dem Hydrothermalprozeß stammenden Erzeugnisse. Vorzugsweise wird vor der Feinzerkleinerung getrocknet. Bei der Zerkleinerung bleibt die Makroporenstruktur zum Teil vollkommen, zum Teil bruchstückhaft erhalten. Diese Struktur kann anhand der Form der Poren erkannt werden, die kugel- bzw. kugelschalenförmig ausgebildet, während die Mikroporenstruktur feinstkapillar aufgebaut ist und im wesentlichen die Feststoffstege zwischen den Makroporen durchsetzt.
Es hat sich in überraschender Weise gezeigt, daß ein derartiger Füllstoff in größeren Mengen als bekannte Füllstoffe zugemischt werden kann und daß dabei die gewünschten Eigenschaften in der Regel sogar noch verbessert werden. Wahrscheinlich ist dieser überraschende Effekt auf die Struktur der durch Feinzerkleinerung entstandenen Körner zurückzuführen, die insbesondere durch die Makroporenstrukturelemente bzw. durch das Garmittel hervorgerufenen Porenstrukturelemente zahnartige bzw. widerhakenartige Verankerung untereinander hervorruft und insofern zur Bindung des damit gefüllten Produkts entscheidend beiträgt. Es sind zwar Calciumhydrosilikate bekannt, die als Füllstoffe Verwendung finden sollen, diese Produkte zeigen jedoch nicht den überraschenden Effekt der Steigerung der gewünschten Eigenschaften bei höheren Füllungsgraden. Das Gärmittel erzeugt in Abhängigkeit von seiner Korngröße die nahezu kugelförmige sogenannte Makroporenstruktur vor dem Hydrothermalprozeß. Bei der Zerkleinerung wird diese Struktur gebrochen, so daß zum überwiegenden Teil kugelschalenförmige, bruchstückhafte Teile der Makroporen entstehen. Elektronenmikroskopische Aufnahmen zeigen, daß die kugelschalenförmige Oberfläche bzw. der Boden der Pore gelartig ausgebildet ist, wobei es sich selbstverständlich um ein festes Gel handelt. Diese Ausbildung des Bodens ist relativ dicht. Vom Boden aus wachsen Mikrokristalle, so daß eine ungebrochene Pore die Ausgestaltung etwa einer Druse aufweist. Die Bruchstücke der Mikropore stellen somit Drusenbruchstücke dar, auf deren Boden Mikrokristalle gewachsen sind. Diese Ausgestaltung des erfindungsgemäßen Füllstoffs bindet daher weniger Bindemittel, obwohl er eine relativ hohe spezifische Oberfläche besitzt. Offenbar werden zahlreiche Mikroporen durch die Bodenstruktur der Makroporen abgedeckt, so daß sie für die Bindemittelbenetzung ausfallen. Insofern ist ein relativ geringer Bindemittelanteil für den Füllstoff erforderlich, um ein gebundenes Produkt zu erhalten, bzw. kann von einer bestimmten Bindemittelmenge eine relativ hohe Füllstoffmenge gebunden werden. Das Bindemittel findet u.a. insbesondere auch durch die Ausgestaltung der Makroporenbruchstücke eine günstige Verankerungsmöglichkeit, zu der die Mikrokristalle beitragen können. Insofern unterscheidet sich der neue Füllstoff deutlich von bisher bekannten Produkten, die meist aus Kristallen bestehen oder glatte Makroporen aufweisen und deshalb sehr viel mehr Bindemittel brauchen, um ein einigermaßen brauchbares Produkt zu bilden. Durch die Vernetzung bzw. Verhakung des Bindemittels auf und/oder in den Körnern bzw. der einzelnen Körner,

die strukturmäßig und/oder geometrisch unregelmäßige Granulate und/oder Partikel darstellen, ergeben sich z. B. Kunststoffprodukte mit besonderen, bisher nicht gekannten Eigenschaften. Z. B. wird durch Einmischung des neuen Füllstoffes in eine PVC-Masse die Schlagzähigkeit der Endprodukte gesteigert und der Elastizitätsmodul erhöht. Es wird angenommen, daß die Kunststoffmasse beim Zumischen des Füllstoffes in die höhlenartige Porenstruktur der Körner eindringen kann und dadurch nach dem Erhärten eine besonders gute Verankerung hervorruft. Hinzukommen die Kapillarkräfte der Mikroporenstruktur und die mechanische Verzahnung oder Sperrung der Körner, so daß ein synergistischer Effekt daraus resultiert, der nicht vorhersehbar war. Ferner trägt auch die hohe spezifische Oberfläche teilweise zur besseren Bindung zwischen den Körnern und dem Bindemittel bei. Schließlich ist sicherlich auch von Vorteil, daß die Quarzkörner, die den Restquarzgehalt des Füllstoffes bilden, durch den Hydrothermalprozeß oberflächlich angelöst und dadurch aufgerauht sind, so daß sie die Verankerung des Bindemittels unterstützen können.

Ein besonders geeigneter Füllstoff des erfindungsgemäßen Typs besteht aus feinzerkleinertem oder gemahlenem Gasbeton. Gewöhnlicher Gasbeton besteht im wesentlichen aus Calciumhydrosilikaten, denen eine Makroporosität mittels eines geeigneten Gärmittels verliehen wird. Üblicherweise wird der Gasbeton aus einer Basismischung hergestellt, die ein kieselsäurehaltiges Material wie Sand für weißen Gasbeton oder Schieferasche oder Flugasche für blaugrauen Gasbeton enthält, und darüber hinaus als Bindemittel Kalk und/oder Zement aufweist, wobei zur Ba-

0002468

- 6 -

sismischung einerseits Wasser und andererseits Aluminiumpulver als Gärmittel zugesetzt wird. Nach der
Gärung wird der Gasbeton auf die gewünschte Weise
zerteilt und entformt und danach unter erhöhtem Druck
und erhöhter Temperatur dampfgehärtet. Hierbei erhält
man ein poröses anorganisches Produkt, dessen Raumgewicht für die Zwecke der Erfindung vorzugsweise 0,4
bis 0,75 kg/dm$^3$ betragen sollte.

Zur Herstellung des für die Zwecke der Erfindung verwendbaren Gasbetons werden vorzugsweise folgende Gemische hergestellt und in üblicher Weise hydrothermal
gehärtet:

            60 bis 75 Gew.-% Quarzsand
            15 bis 25 Gew.-% Kalk
             0 bis  5 Gew.-% Zement

Nachstehend folgt ein Beispiel der Zusammensetzung eines
Gasbetontyps, der nach der Zerkleinerung für den erfindungsgemäßen Zweck geeignet ist. Dieser Gasbeton weist
eine Analyse gemäß folgender Tabelle auf.

| Komponente | Gew.-% | | | Gew.-% |
|---|---|---|---|---|
| | von | bis | vorzugsw. | |
| $SiO_2$ | 56,0 | 65,0 | " | 63,6 |
| $Al_2O_3$ | 0,8 | 4,9 | " | 1,8 |
| $Fe_2O_3$ | 0,5 | 2,2 | " | 0,5 |
| CaO | 20,4 | 31,6 | " | 24,8 |
| Rest (MnO, MgO, $Na_2O$, $K_2O$) | 0,8 | 2,4 | " | 0,8 |
| Glühverlust | 6,5 | 12,0 | " | 8,3 |

- 7 -

Im Größenbereich von 2 bis 4 mm haben die zerkleinerten Körner dieses Gasbetons eine spezifische Oberfläche von 23 m²/g. Analoge Körner, die aus einem anderen Gasbeton hergestellt wurden, haben z. B. eine spezifische Oberfläche von 42 bzw. 38 m²/g. Diese hohen Werte der spezifischen Oberfläche erklären sich dadurch, daß der Gasbeton außer den Makroporen, die man durch das Gärmittel erhält, auch Mikroporen enthält, welche bekanntermaßen bei der Bildung der Calciumhydrosilikate entstehen.

Es hat sich in überraschender Weise gezeigt, daß der Füllstoff-hergestellt aus Gasbeton-seine hohe spezifische Oberfläche beibehält, auch bei Feinzerkleinerung des Materials bis zu einer Fraktion weit unter einem Millimeter. Beispielsweise wurden zwei verschiedene mehlähnliche Fraktionen aus einem feingemahlenen weißen Gasbeton verwendet, nämlich eine erste mit einer maximalen Partikelgröße kleiner 90 μm und eine zweite mit einer maximalen Partikelgröße kleiner 20 μm. Neben herkömmlichen Mischungsverhältnissen bis zu etwa 60 Gew.-% wurden derartige Partikel in einer Polyäthylen-Kunststoffmasse in einer Menge von 60 bis 80 Gew.-% eingemischt, wobei z. B. bei einer Extrudierung zähe plattenförmige Probestücke mit guter Festigkeit erzielt wurden. Sogar bei Füllmittelzusätzen, die 80 Gew.-% der gesamten Materialmenge überschritten, erzielte man gut zusammenhaltende Probestücke, welche sogar ein neuartiges metallisches Aussehen hatten. Auch in PVC-Kunststoffmassen hat die Einmischung von Füllstoff aus Gasbeton-Partikeln gute Ergebnisse gebracht.

Die hervorragenden überraschenden Eigenschaften des neuen Füllstoffes sollen im folgenden beispielhaft näher erläutert werden.

Es wurden steife PVC-Rohre hergestellt, die einen zerkleinerten Gasbeton mit oben angegebener Rezeptur als Füllstoff enthielten. Es zeigte sich, daß bei gleicher Zusatzmenge im Vergleich zu Kreide als Füllstoff insbesondere die Schlagfestigkeit nach dem Pendelschlagversuch besser war. Ferner wurde eine verbesserte Feuerbeständigkeit festgestellt, indem sich dabei ein höherer Sauerstoffindex (ASTH-Methode Oxygen Index) und eine geringere Rauchentwicklung (Gew.-% gemäß Arapakoe) ergab.

Bei einem weichgemachten PVC wurde ein niedrigeres Abfließen bei höheren Gehaltswerten von Weichmachern ermittelt (wesentlich besserer El-Wert). Beispielsweise ergab sich bei 20 phr Weichmacher ein 20mal höherer Wert im Vergleich zur füllstofffreien Probe. Konventionelle Füllstoffe wie gefällte Kreide ergeben in der Regel nur einen 2-fach höheren Wert. Durch die Weichmacheradsorption erhält man eine Erhöhung der Shore-A-Härte von 81 für den weichgemachten PVC ohne Füllstoff bis auf 87. Bei Zusatz von 20 phr gewöhnlicher Kreide wird eine Erhöhung von 81 lediglich auf 83 erzielt. In überraschender Weise hat sich gezeigt, daß man ein bei Raumtemperatur härteres Material erhält, dessen Kälteeigenschaft trotz der hohen Härte sehr gut ist (Flexibilität).

Bei der Messung der Weichmacherflüchtigkeit zeigte sich nach sieben Tagen, daß die Flüchtigkeit bei einem Zusatz von 60 Gew.-% des erfindungsgemäßen Füllstoffes nur 2,1 % betrug. Im Vergleich wurden bei Kreide als Füllstoff im weichgemachten PVC 7,1 % gemessen.

Es wurden bei einer anderen Versuchsserie 40 phr Krei-

de oder 40 phr erfindungsgemäßer Füllstoff einer Polyäthylenmasse (Butyl-geimpftes HDPE) zugesetzt und die
Densität gemessen sowie der Volumenbeitrag des Füllstoffes errechnet. Dabei ergab sich ein 40 bis 45 %
größerer Volumenbeitrag für den erfindungsgemäßen
Füllstoff.

Als Farbmittelzusatz wirkt der erfindungsgemäße Füllstoff als sehr wirksames Entglänzungsmittel.

Papiere, die den erfindungsgemäßen Füllstoff enthalten,
zeigen eine gleichmäßigere Druckfarbenadsorption gegenüber Papieren, die übliche Kaoline als Füllstoffe aufweisen. In diesem Zusammenhang zeigte sich auch eine
höhere Lichtdispersion bzw. eine bessere Opazität.

In peroxidvulkanisierten EPDM-Materialien wird üblicherweise Kaolin verwendet, um mit Hilfe von Silan bessere
mechanische Eigenschaften des Materials zu erzielen.
Die verbesserten mechanischen Eigenschaften werden
durch eine Silanbildung zwischen Füllstoff im Elastomer zustandegebracht. Eine entsprechende Verstärkung
kann mit dem erfindungsgemäßen Füllstoff in einem
EPDM-Gummi erzielt werden.

Eine besondere Ausführungsform der Erfindung sieht
vor, daß der erfindungsgemäße Füllstoff Träger für
ein oder mehrere Zusatzmittel ist. Es hat sich nämlich
gezeigt, daß der erfindungsgemäße Füllstoff durch seine
besonderen Adhäsions- und Kapillarkräfte Zusatzmittel in
erheblichen Mengen speichern kann. Das Auftragen der Zusatzmittel kann nach der Zerkleinerung erfolgen. Es können aber auch bei der Herstellung des Füllstoffes dem
Ausgangsgemenge bereits die als Zusatzmittel dienenden

- 10 -

Stoffe zugesetzt werden und dann nach dem Hydrothermalprozeß ggf. chemisch gebunden im Füllstoffkorn vorliegen. Die Zusatzmittel können Stoffe sein, die das Endprodukt bzw. seine Herstellung beeinflussen. Beispielsweise können als Zusatzmittel Gärmittel zur Porenbildung
in den End- und Zwischenprodukten, Peroxide zur vorübergehenden Bindung, Aktivatoren unterschiedlichster Art,
korrosionsdämpfende Komponenten, feuerhemmende Komponenten usw. verwendet werden.

Die Zusatzmittel tragende Funktion des erfindungsgemäßen
Calciumsilikathydrat-Füllstoffes kann dadurch verwirklicht werden, daß das infrage kommende Zusatzmittel
mechanisch mit dem Calciumhydrosilikatmaterial nach
dessen Herstellung gemischt wird, eventuell ergänzt
mit einer Bindemittelbehandlung für die Zurückhaltung
des Zusatzmittels auf oder in den Materialkörnern und/
oder Partikeln. Es ist jedoch auch möglich, das Zusatzmittel an das Calciumhydrosilikatmaterial bereits im
Zusammenhang mit dessen Herstellung zu binden, nämlich,
indem man das Zusatzmittel in das Gemenge der Komponenten hineingibt, das für die Herstellung des Calciumhydrosilikatmaterials erforderlich ist. Hierbei ist es
obendrein möglich, innerhalb weiter Grenzen das Rezept
für das Calciumhydrosilikatmaterial so zu variieren,
daß eine oder mehrere Komponenten, die für die Carbolenproduktion herkömmlicher Weise als notwendig erachtet
werden, aus dem Rezept ausscheiden können, während eine
oder mehrere Komponenten hinzukommen können, die im Zusammenhang mit dem gefüllten Produkt, in welchem der
Füllstoff enthalten sein soll, von selektivem Interesse
sind.

Darüber hinaus ist es möglich, den erfindungsgemäßen
Füllstoff zu modifizieren. Es können die durch die Zerkleinerung und/oder durch Mahlen erhaltenen Körner bzw. Partikel hydrophobiert werden, indem in an sich bekannter Weise die Affinität des Materials zu Wasser herabgesetzt wird. Dadurch werden u.a. die Möglichkeiten verbessert, das Material zu lagern. Ebenso wird insbesondere das Fließvermögen der feineren Partikel verbessert bzw. wird die Klumpenbildung auf ein Minimum reduziert oder ganz eliminiert. Das Hydrophobieren kann vorteilhafterweise mit Hilfe verschiedener Typen von Silikonen durchgeführt und von diesen z. B. ein Präparat mit der Bezeichnung "Transsilan" ausgewählt werden, das in Äthylalkohol gelöst wird und oberflächenaktive Zusätze aufweist, wobei das Präparat mit 5 bis zu 100 Teilen Wasser vor dem Imprägnieren verdünnt werden kann. Dieses Präparat hat eine gute Alkaliresistenz neben einer guten Langzeitwirkung. Geeigneterweise erfolgt das Imprägnieren durch Aufsprühen. Selbstverständlich können auch andere Silikone, z. B. organofunktionelle Silane, verwendet werden.

Das erfindungsgemäße Füllstoffmaterial kann herstellungsbedingt auch variierende Mengen von Farboxiden und z. B. $Sb_2O_3$, $Fe_2O_3$, $MoO_3$ und $MgCO_3$ für verschiedene Zwecke enthalten, wobei mit $Sb_2O_3$ ein besonderer rauchhemmender Effekt erzielt wird.

Der erfindungsgemäße Füllstoff kann in einer Vielzahl von Produkten verwendet werden, wobei jedoch zumindest ein organisches Bindemittel vorliegen sollte. Besonders vorteilhaft ist die Verwendung in Kunststoffen, wobei Duro- und Thermoplaste in Frage kommen. Der erfindungsgemäße Füllstoff kann sehr feinkörnige Fraktionen bis etwa 2 mm aufweisen, wobei sich jedoch herausgestellt hat, daß die am besten geeigneten Fraktionen innerhalb des Bereichs unter 0,5 mm, ins-

0002468

- 12 -

besondere unter 0,10 mm liegen. Die letztgenannten Fraktionen sind insofern vorteilhaft, als die Körner oder Partikel leicht fließen und sich leicht mit den Bindemittelkomponenten mischen lassen. Die Wahl der Korngröße oder des Kornbandes ist abhängig vom zu verstärkenden Produkt und ist empirisch zu ermitteln. Für gewisse Zwecke ist es am vorteilhaftesten, die Körner unter 0,02 mm zu verwenden, für andere aber z. B. Körner zwischen 0,02 und 0,1 mm. Die Fraktionen unter 0,1 mm sind insofern vorteilhaft. Die gleichen feinen Fraktionen des erfindungsgemäßen Füllstoffes lassen sich sehr gut einmischen in Gummi in Form von Naturgummi und synthetischem Gummi, Farbprodukten, Lack- oder ähnlichen Oberflächenbehandlungsprodukten, Kleber-, Leim- oder ähnlichen Adhäsionsmittelprodukten, Pappe- oder Papierprodukten, z. B. Tapeten, Faser- und/oder Spanprodukten, z. B. Holzfaserplatten, Petroleumprodukten, z. B. Asphalt, und in Gemischen aus obigen Produkten.

Die Vorteile des erfindungsgemäßen Füllstoffes, insbesondere in den oben ausgeführten Anwendungsbereichen, sind, daß sich der Füllstoff in einer Menge zumischen läßt, die höher liegt als die zumischbare Menge üblicher Füllstoffe. Ferner ist von besonderem Vorteil, daß insbesondere der Calciumsilikathydrat-Füllstoff einen Gehalt an chemisch gebundenem Wasser von 5 bis 15 Gew.-% besitzt und dieser Wassergehalt entscheidend zur Feuer- und Flammenbeständigkeit des Endproduktes beitragen kann. Außerdem wirkt dieser Füllstoff korrosionshemmend, weil er alkalisch reagiert und Säuren neutralisiert.

Obwohl die vorstehende Erfindung im Zusammenhang gerade mit Gasbeton oder mit gasbetonähnlichen Erzeugnissen beschrieben wurde, wie Calciumhydrosilikatmaterial, ist die Erfindung nicht auf diese Produkte beschränkt. Viel-

- 13 -

mehr kommen auch ähnliche Materialien in Frage. Wesentlich ist dabei, daß die Körner bzw. Partikel des Füllstoffes strukturmäßig unregelmäßig sind und eine spezifische Oberfläche aufweisen, die mindestens 10, vorzugsweise mindestens 20 $m^2$/g beträgt. Insofern liegt im Rahmen der Erfindung auch ein Füllstoff, der aus Schaum- oder Zellbeton hergestellt ist.

Beispiel 1

Zunächst wurde die Weichmacherabsorption mit anderen bekannten Füllstoffen gleicher Korngröße und Kornverteilung verglichen. Dabei wurde die sogenannte "Titermethode" angewendet, mit der die Menge an Dioptylphtalat gemessen wird, die 5 g des Füllstoffes absorbieren. Es ergab sich folgendes Ergebnis:

|  | ml DOP/5 g Füllstoff |
|---|---|
| Feingemahlener Gasbeton | 16,4 |
| Kreide | 5,3 |
| Spezialkreide | 7,1 |

Beispiel 2

Zur Herstellung eines Hart-PVC's wurde die folgende Mischung hergestellt:

| 100 Gew.-Teile | PVC-Suspension |
|---|---|
| 1 " | Stabilisator |
| 0,3 " | Wachs |
| 10 " | Füllstoff (Kreide/Gasbeton) |

Die Mischung wurde 10 Minuten lang bei 170° C gewalzt (gemischt) und 10 Minuten lang bei 170° C gepreßt. Anschließend wurden Platten hergestellt und wie üblich geprüft. Dabei zeigte sich, daß bei Verwendung des erfindungsgemäßen Füllstoffs der Oxygen-Index besser

- 14 -

war. Vor allem konnte eine besonders günstige Weichmacherabsorption festgestellt werden, die sich bei
Festigkeitsversuchen bemerkbar machte.

Auch im Gemisch mit Kreide führt der erfindungsgemäße
Füllstoff zu besseren Resultaten in bezug auf das
fertige Hart-PVC-Produkt. Es ergibt sich eine geringere Dichte, ein wesentlich besserer elektrischer Wert,
eine größere Shore-A-Härte und eine höhere Niedrigtemperaturflexibilität. Vor allem konnte auch in diesem Fall ein deutlich höheres Weichmacherrückhaltevermögen erzielt werden.

Beispiel 3

Zur Herstellung von Weich-PVC wurden folgende Rezepturen verwendet:

|  | Rezept 1 | Rezept 1 |
|---|---|---|
| PVC-Suspension | 100 | 100 |
| Tribas. Bleisulfat | 5 | 5 |
| Ca-stearat | 50 | 100 |
| Füllstoff | 20,40,60 | 40,100 |

Die Rezepturen wurden 10 Minuten lang bei 150$^{\circ}$ C gewalzt und 10 Minuten lang bei 150$^{\circ}$ C gepreßt. Als
Füllstoff wurden übliche Kreide und feinzerkleinerter Gasbeton verwendet. Die Proben wurden wie üblich
geprüft. Dabei zeigte sich, daß der elektrische Wert
20mal höher lag als bei Proben ohne Füllstoff, während
durch eine Spezialkreide nur eine Verdoppelung des
elektrischen Wertes erreicht wird. Die Shore-A-Härte
lag bei Verwendung des erfindungsgemäßen Füllstoffes
deutlich höher, ebenso das Weichmacherrückhaltevermögen.

- 15 -

Beispiel 4

Es wurde ein Butyl-geimpftes Niederdruckpolyäthylen mit 40 phr Kreide bzw. Gasbetonfüllstoff versetzt und die Densität gemessen. Dabei ergab sich bei Kreide eine Densität von 1,253 und beim erfindungsgemäßen Füllstoff von 1,153. Daraus errechnete sich ein Volumenbeitrag von 0,399 für Kreide und von 0,573 Liter/kg für Gasbetonfüllstoff.

Ansprüche:

1. Anorganischer, synthetischer, Calcium- und/oder Magnesiumhydrosilikate aufweisender Füllstoff für insbesondere Kunststoffe oder dergleichen, g e k e n n z e i c h n e t   d u r c h  Partikel, die eine Makro- und eine Mikroporenstruktur aufweisen.

2. Füllstoff nach Anspruch 1, d a d u r c h   g e - k e n n z e i c h n e t, daß die Makroporen teils vollkommen und/oder teils bruchstückhaft ausgebildet sind und Feststoffstege bilden, die mit feinstkapillaren Mikroporen durchsetzt sind.

3. Füllstoff nach Anspruch 1 und/oder 2, g e k e n n - z e i c h n e t   d u r c h  eine spezifische Oberfläche gemessen nach BET von über 10 m$^2$/g, vorzugsweise von 25 bis 50 m$^2$/g.

4. Füllstoff nach einem oder mehreren der Ansprüche 1 bis 3, d a d u r c h   g e k e n n z e i c h - n e t, daß die Partikel Korngrößen unter 2,0, vorzugsweise unter 0,5, insbesondere unter 0,1 mm aufweisen.

5. Füllstoff nach einem oder mehreren der Ansprüche 1 bis 4, d a d u r c h   g e k e n n z e i c h -

0002468

- 2 -

n e t, daß er aus Calcium- und/oder Magnesiumhydrosilikaten besteht und durch ein Hydrothermalverfahren
hergestellt ist.

6. Füllstoff nach Anspruch 5, d a d u r c h  g e -
k e n n z e i c h n e t, daß er aus einem Gemenge
durch Hydrothermalsynthese und anschließende Zerkleinerung des Reaktionsproduktes hergestellt ist,
wobei das Gemenge eine reaktionsfähige CaO- und/oder
MgO-Komponente sowie eine reaktionsfähige $SiO_2$-
Komponente, vorzugsweise Quarzmehl, und Wasser enthält und die Makroporen mit Porenbildnern, vorzugsweise mit  Al-Pulver,  vor dem Hydrothermalprozeß
erzeugt worden sind.

7. Füllstoff nach einem oder mehreren der Ansprüche
1 bis 6, d a d u r c h  g e k e n n z e i c h -
n e t, daß er einen Restquarzgehalt von 0 - 20
Gew.-%, vorzugsweise von  6  bis  8  Gew.-%, aufweist.

8. Füllstoff nach einem oder mehreren der Ansprüche
1 bis 7, d a d u r c h  g. e k e n n z e i c h -
n e t, daß er aus einem feinzerkleinerten Gasbeton-
Produkt besteht.

9. Füllstoff nach Anspruch 8, d a d u r c h  g e -
k e n n z e i c h n e t, daß er ein feinzerkleinertes Gasbeton-Produkt aufweist, das unter Verwendung
von lediglich Kalk als Bindemittel hergestellt ist.

10. Füllstoff nach Anspruch 8, d a d u r c h  g e -
k e n n z e i c h n e t, daß er ein feinzerkleinertes Gasbetonprodukt aufweist, das unter Verwendung
von Kalk und Zement als Bindemittel hergestellt ist.

11. Füllstoff nach Anspruch 8 u/o 9 u/o 10, d a d u r c h g e k e n n z e i c h n e t, daß er aus einem feinzerkleinerten Gasbeton besteht, der vor der Zerkleinerung ein Raumgewicht von 0,4 bis 0,75 kg/dm$^3$ aufweist.

12. Füllstoff nach einem oder mehreren der Ansprüche 8 bis 11, d a d u r c h g e k e n n z e i c h - n e t, daß er aus einem zerkleinerten Gasbeton besteht, der aus folgendem Gemenge hergestellt ist:

    60 bis 75 Gew.-% Quarzsand
    15 bis 25 Gew.-% Kalk
     0 bis  5 Gew.-% Zement

13. Füllstoff nach einem oder mehreren der Ansprüche 1 bis 12, d a d u r c h g e k e n n z e i c h - n e t, daß er einen chemisch gebundenen Wassergehalt von 5 bis 15 Gew.-%, vorzugsweise von 7 bis 13 Gew.-%, aufweist.

14. Füllstoff nach einem oder mehreren der Ansprüche 1 bis 13, d a d u r c h g e k e n n z e i c h - n e t, daß er ein Zusatzmittel enthält.

15. Füllstoff nach Anspruch 14, d a d u r c h g e - k e n n z e i c h n e t, daß er ein oder mehrere Zusatzmittel adsorptiv trägt.

16. Füllstoff nach Anspruch 15, d a d u r c h g e - k e n n z e i c h n e t, daß er als Zusatzmittel ein Gärmittel trägt.

17. Füllstoff nach Anspruch 15 und/oder 16, d a - d u r c h g e k e n n z e i c h n e t, daß das Zusatzmittel ein Peroxid und/oder Aktivator und/ oder korrosionshemmender und/oder feuerhemmender Stoff ist.

18. Füllstoff nach Anspruch 14, d a d u r c h g e - k e n n z e i c h n e t, daß er hydrophobiert, vorzugsweise mit Silikonen, hydrophobiert ist.

19. Füllstoff nach Anspruch 14, d a d u r c h g e - k e n n z e i c h n e t, daß er das Zusatzmittel in der Struktur, vorzugsweise chemisch gebunden, enthält.

20. Füllstoff nach Anspruch 19, d a d u r c h g e - k e n n z e i c h n e t, daß er als Zusatzmittel $Sb_2O_3$, vorzugsweise in Mengen von 2 bis 6 Gew.-%, enthält.

21. Füllstoff nach Anspruch 19, d a d u r c h g e - k e n n z e i c h n e t, daß er Farbstoffe enthält.

22. Kunststoff, bestehend im wesentlichen aus PVC, enthaltend einen Füllstoff gemäß einem oder mehreren der Ansprüche 7 bis 21, vorzugsweise in Mengen von 2 bis 90 phr (per hundred resin).

23. Kunststoff, bestehend im wesentlichen aus Polyäthylen, enthaltend einen Füllstoff gemäß einem oder mehreren der Ansprüche 7 bis 21, vorzugsweise in Mengen von 20 bis 40 phr.

24. Papier oder Pappe, enthaltend einen Füllstoff gemäß einem oder mehreren der Ansprüche 7 bis 21, vorzugsweise in Mengen von 2 bis 20 Gew.-%.

- 5 -

25. Farbmischung, enthaltend einen Füllstoff gemäß
einem oder mehreren der Ansprüche 7 bis 21, vorzugsweise in Mengen von 2 bis 20 Gew.-%.

26. Gummi, enthaltend einen Füllstoff gemäß einem oder
mehreren der Ansprüche 7 bis 21, vorzugsweise in
Mengen von 4 bis 40 phr.

0002468

**Europäisches Patentamt**

**EUROPÄISCHER RECHERCHENBERICHT**

Nummer der Anmeldung

EP 78 10 1500

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | FR - A - 2 163 451 (HEBEL GAS-BETONWERK) <br><br> * Seite 4, Zeilen 25-35; Seite 9, Zeilen 24-30; Seiten 10-12 und Patentansprüche * <br> -- | 1-26 |
| | CH - A - 359 690 (DEGUSSA) <br><br> * Seite 1, Zeilen 66-67; Patentansprüche * <br> -- | 1-26 |
| | GB - A - 1 385 810 (REIMBOLD & STRICK) <br><br> * Seite 2, Zeilen 48 bis 55; Patentansprüche * <br> -- | 1-26 |
| A | US - A - 3 915 725 (AKIRA TAKAHASHI) <br><br> * Patentansprüche * <br> -- | 1 |
| A | GB - A - 1 400 876 (DYCKERHOFF ZEMENT) <br><br> * Seite 2, Zeilen 40 bis 45 und 105-118 * <br> ---- | 1 |

**KLASSIFIKATION DER ANMELDUNG (Int.Cl.²)**

C 08 K 7/26
C 09 C 1/28
C 01 B 33/24

**RECHERCHIERTE SACHGEBIETE (Int. Cl.²)**

C 08 K 3/00
C 08 K 3/34
C 08 K 7/26
C 09 C 1/28
C 01 B 33/24

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 07-03-1979 | LENSEN |

EPA form 1503.1   06.78